# FASCICULE DE BREVET EUROPEEN

(11) **EP 2 315 001 B1**
(45) Date de publication et mention de la délivrance du brevet: **03.08.2016**
(21) Numéro de dépôt: 10290549.4
(22) Date de dépôt: 13.10.2010
(51) Int. Cl.: G01N 21/17

(54) **Dispositif de détection d'un gaz**
Vorrichtung zur Gaserkennung
Gas detection device

(30) Priorité: 23.10.2009 FR 0905119
(43) Date de publication de la demande: 27.04.2011
(73) Titulaire: Commissariat à l'Énergie Atomique et aux Énergies Alternatives, 75015 Paris (FR)
(72) Inventeur: Gidon, Serge, 38140 La Murette (FR); Chaton, Patrick, 38570 Theys (FR); Nicoletti, Sergio, 38650 Sinard (FR)
(74) Mandataire: Gevers & Orès

(56) Documents cités:
- EP-A1- 0 478 410
- PRUESSNER M W ET AL: "Micromechanical resonators with integrated optical waveguides for sensing applications", LASERS AND ELECTRO-OPTICS, 2005. (CLEO). CONFERENCE ON BALTIMORE, MD, USA MAY 22-27, 2005, PISCATAWAY, NJ, USA,IEEE, vol. 1, 22 mai 2005 (2005-05-22), pages 761-763, XP010876710, ISBN: 978-1-55752-795-0
- SIWAK N ET AL: "Indium Phosphide Optical MEMS for Chemical and Biological Sensing", LIFE SCIENCE SYSTEMS AND APPLICATIONS WORKSHOP, 2006. IEEE/NLM, IEEE, PI, 1 juillet 2006 (2006-07-01), pages 1-2, XP031102582, ISBN: 978-1-4244-0277-9
- CHURENKOV A V: "Silicon micromechanical optical waveguide for sensing and modulation", SENSORS AND ACTUATORS A, ELSEVIER SEQUOIA S.A., LAUSANNE, CH LNKD- DOI:10.1016/S0924-4247(97)80090-8, vol. 57, no. 1, 1 octobre 1996 (1996-10-01), pages 21-27, XP004058203, ISSN: 0924-4247
- ZINOVIEV KIRILL ET AL: "Optical waveguide cantilever actuated by light", APPLIED PHYSICS LETTERS, AIP, AMERICAN INSTITUTE OF PHYSICS, MELVILLE, NY, US LNKD- DOI:10.1063/1.2830818, vol. 92, no. 1, 4 janvier 2008 (2008-01-04), pages 11908-11908, XP012105633, ISSN: 0003-6951
- C. HAGLEITNER, D. LANGE, A. HIERLEMANN, O. BRAND, H. BALTES: "CMOS single-chip gas detecion system comprising capacitive, calorimetric and mass-sensitive microsensors", IEEE JOURNAL OF SOLID STATE CIRCUITS, vol. 37, no. 12, décembre 2002 (2002-12), XP002581956,

## Description

L'invention concerne un dispositif de détection de gaz.

Ces dispositifs sont notamment utilisés pour détecter la présence de dioxyde de carbone, de monoxyde de carbone ou encore de méthane, afin d'éviter, par exemple, des accidents domestiques par anoxie.

On connait déjà différents dispositifs de détection de gaz.

On peut citer les dispositifs qui utilisent des processus d'absorption physico-chimiques sur une surface (par exemple sur des couches d'oxyde d'étain), ces processus d'absorption provoquant une modification d'une propriété physique d'un matériau (par exemple le nombre de porteurs). Cette modification peut alors être détectée de manière simple, par exemple par conduction électrique.

Ce type de dispositif est très sensible. De ce fait, il n'est pas très précis car il s'avère qu'il ne détecte pas nécessairement le gaz présumé présent. En effet, son déclenchement peut, par exemple, être provoqué par l'humidité du milieu.

D'autres dispositifs mettent en oeuvre des processus d'absorption sur une surface d'un matériau organique ayant une affinité chimique pour le gaz à détecter. La modification détectée peut être là encore la conduction électrique mais aussi la variation de la masse du matériau grâce à une microbalance.

Ces dispositifs présentent un inconvénient majeur qui est lié à la nature chimique de l'interaction. En effet, le gaz reste piégé dans le matériau organique et, au cours du temps, le dispositif perd sa sensibilité.

D'autres dispositifs détectent des gaz en utilisant des raies d'absorption caractéristiques du gaz recherché. En effet, les gaz ont des signatures spectrales bien marquées dans l'infrarouge qui permettent de les distinguer les uns des autres.

On entend par *« signature spectrale d'un gaz* », le spectre d'absorption qui lui est spécifique et qui correspond à une dissipation de l'énergie lumineuse suite à une mise en résonnance avec la longueur d'onde utilisée des molécules du gaz. Un transfert énergétique se produit donc entre l'onde lumineuse et les molécules du gaz.

Ainsi, on peut citer la détection Lidar (Light Detection and Ranging) qui consiste à détecter l'écho optique de diffusion généré par une poche de gaz absorbante et diffusante ou encore la détection photoacoustique qui consiste à détecter la surpression du gaz chauffé par l'absorption d'un rayonnement et qui se dilate au sein de la cavité dans laquelle il est placé.

En ce qui concerne la détection acoustique, on peut citer l'article de Hagleitner C. and al « CMOS single - chip gas detection system comprising capacitive, calorimetric and mass-sensitive microsensors » paru dans IEEE Journal of Solid - State circuits, vol 37, n°12, December 2002.

Dans ce dernier cas, la radiation lumineuse est absorbée par les liaisons moléculaires du gaz et transformée en énergie cinétique, ce qui se traduit, d'un point de vue macroscopique, en un échauffement du gaz. Cet échauffement provoque une augmentation locale de pression qui est détectée au moyen d'une membrane dont on mesure le mouvement.

Un dispositif de ce type utilise avantageusement la spécificité de la signature spectrale d'un gaz.

Il présente cependant des inconvénients.

Tout d'abord, la sensibilité de la mesure dépend de la surface de la membrane. Ainsi, les possibilités de miniaturiser le dispositif de détection sont considérablement limitées, si l'on souhaite obtenir une précision raisonnable.

Par ailleurs, un tel dispositif doit être utilisé avec une enceinte fermée, notamment un tube, dans laquelle on fait circuler le gaz. Il est donc nécessaire de prévoir des moyens de pompage assurant la circulation du gaz à l'intérieur de l'enceinte.

L'utilisation d'un tel dispositif impose donc des conditions de mise en oeuvre contraignantes. Ainsi, ce dispositif de détection ne pourrait pas être utilisé à des fins domestiques.

L'invention a pour objet de pallier ces inconvénients en proposant un dispositif de détection d'un gaz qui soit compact, tout en assurant une détection précise du gaz, et dont l'utilisation est très simple, ce qui permet d'envisager des applications domestiques.

Ainsi, l'invention concerne un dispositif de détection d'un gaz comprenant :
- des moyens d'excitation dudit gaz au moyen d'une onde électromagnétique dont la longueur d'onde correspond sensiblement à celle dudit gaz et,
- des moyens de détection de l'excitation dudit gaz,
caractérisé en ce qu'il comprend :
- un guide d'onde relié auxdits moyens d'excitation dont une partie forme un élément mobile destiné à être en contact avec le gaz et susceptible d'être mis en vibration par le choc des molécules du gaz excité,
- un capteur de mesure de la vibration dudit élément, ledit capteur de mesure et ledit élément formant lesdits moyens de détection.

De façon avantageuse, l'élément mobile est du type lame.

Dans ce cas, il peut également présenter une structure du type peigne, c'est-à-dire une structure présentant des ouvertures selon la longueur de l'élément.

Dans l'ensemble de la demande de brevet, on entendra par *« élément du type lame* », un élément plan et allongé, dont l'épaisseur est très inférieure à sa longueur et dont la largeur est très inférieure à sa longueur.

Ainsi, la largeur de l'élément est de l'ordre de la longueur d'onde, son épaisseur est inférieure à la longueur d'onde et sa longueur est supérieure à 10 fois la longueur d'onde.

Dans un premier mode de réalisation, l'élément est maintenu en porte à faux au niveau de son extrémité proximale, son extrémité distale étant libre.

Dans un deuxième mode de réalisation, les extrémités proximale et distale de l'élément sont maintenues fixes.

De préférence, l'élément comporte à proximité de son extrémité proximale et/ou distale, une fente s'étendant sensiblement transversalement.

Ainsi, un champ électromagnétique existe en bord de l'élément. C'est ce champ qui va servir à exciter le gaz. Dans cette configuration, ce sont les molécules à proximité de l'élément qui seront excitées par l'absorption de l'onde électromagnétique qui provoque un accroissement de leur vitesse statistique. Ces mêmes molécules sont alors susceptibles de perdre cet excès d'énergie en venant frapper toutes les surfaces avoisinantes et en particulier, celles de l'élément mobile.

C'est pourquoi, de préférence, l'épaisseur de l'élément est inférieure à celle du reste du guide d'onde.

En effet, l'intensité du champ autour de l'élément sera d'autant plus grande que son épaisseur est réduite.

De façon avantageuse, le guide d'onde est réalisé dans un seul matériau.

En variante, l'élément comporte sur l'une de ses faces, une couche d'un matériau présentant un indice inférieur à celui constituant le guide d'onde.

Les moyens d'excitation du gaz sont avantageusement constitués par un laser.

Dans un mode particulier de réalisation du dispositif, la cavité laser est en anneau, le guide d'onde étant placé à l'intérieur de la cavité laser.

L'invention sera mieux comprise et d'autres buts, avantages et caractéristiques de celle-ci, apparaîtront plus clairement à la lecture de la description qui suit et qui est faite au regard des dessins annexés sur lesquels :
- la figure 1 est une vue de côté d'un exemple de réalisation d'un dispositif de détection de gaz selon l'invention,
- la figure 2 est une vue de dessus du dispositif illustré à la figure 1,
- la figure 3 est une vue de dessus d'une variante de réalisation du dispositif illustré sur les figures 1 et 2,
- la figure 4 illustre l'évolution de l'amplitude du champ électromagnétique à l'intérieur et autour d'un élément mobile du dispositif selon l'invention, placé dans l'air et réalisé en silicium,
- La figure 5 illustre l'évolution de l'amplitude du champ électromagnétique à l'intérieur et autour d'un élément mobile du dispositif selon l'invention, placé dans l'air, réalisé en silicium et recouvert sur une de ses faces d'une couche de silice,
- La figure 6 illustre une variante de réalisation du dispositif de détection selon l'invention, dans laquelle est prévue une disposition particulière des moyens d'excitation du gaz et de l'élément mobile du dispositif de détection et,
- Les figures 7a à 7d représentent quatre étapes d'un procédé de réalisation d'un exemple de dispositif de détection d'un gaz selon l'invention.

Les éléments communs aux différentes figures seront désignés par les mêmes références.

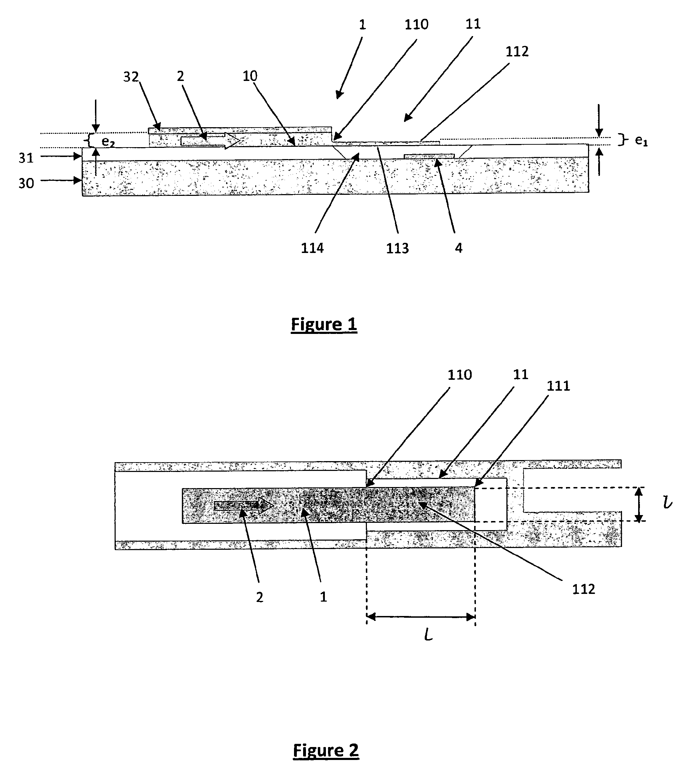

On se réfère tout d'abord aux figures 1 et 2 qui illustrent un exemple de réalisation du dispositif de détection d'un gaz selon l'invention.

Ce dispositif est directement placé dans le milieu susceptible de comporter le gaz à détecter.

Il comporte un guide d'onde 1 relié, par des moyens appropriés, à des moyens d'excitation du gaz au moyen d'une onde électromagnétique.

Ces moyens d'excitation sont classiquement constitués par un laser. La longueur d'onde choisie correspond sensiblement à celle du gaz dont la détermination est recherchée.

Ces moyens d'excitation ne sont pas représentés sur les figures 1 et 2.

L'onde électromagnétique est symbolisée par la flèche 2.

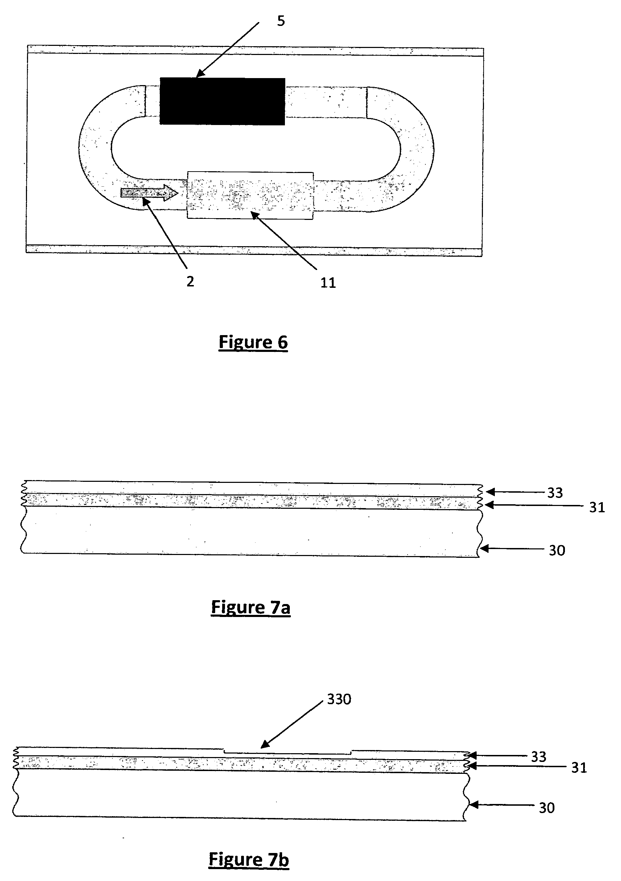

Comme cela sera décrit plus précisément au regard des figures 7a à 7d, le guide d'onde 1 est réalisé à partir d'un empilement de couches. Dans cet exemple, la couche 30 est un substrat en silicium, la couche 31 dite « *couche sacrifiée »* est en silice, et le guide 1 est en silicium.

Les couches 30 et 31 forment le support du guide d'onde.

Les figures 1 et 2 montrent que le guide d'onde comporte deux parties différenciées : une première partie 10 fixée au support et plus particulièrement à la couche 31 et une deuxième partie 11 qui forme un élément mobile du type lame.

En effet, les figures montrent qu'au niveau de cette deuxième partie 11, la couche 31 de silice a été retirée, ce qui permet de libérer la partie 11 du support. Ainsi, l'élément du type lame est maintenu en porte à faux sur le support, au niveau de son extrémité proximale 110. Les deux faces 112 et 113 de l'élément 11 sont en contact avec le milieu contenant le gaz à détecter.

On peut envisager des modes de réalisation dans lesquels sensiblement seule la face supérieure 112 de l'élément 11 est en contact avec le milieu.

Ainsi, si l'espace libre 114 sous l'élément 11 est réduit, c'est essentiellement la face supérieure 112 qui sera en contact avec le gaz à détecter.

En fonctionnement, le guide 1 amène le champ électromagnétique au milieu contenant le gaz à détecter.

Ce champ électromagnétique apporte de l'énergie aux molécules du gaz à détecter et la vitesse statistique de celles-ci augmente. De ce fait, les molécules du gaz viennent frapper la surface de l'élément du type lame 11. Le choc des molécules du gaz crée une impulsion mécanique sur cet élément mobile, ce qui provoque sa mise en vibration.

Le dispositif de détection selon l'invention comporte également des moyens 4 de mesure de la vibration.

Des moyens différents peuvent être envisagés.

Ainsi, ces moyens peuvent être un capteur capacitif qui analyse électriquement la variation de distance de l'élément 11 au substrat 30. Un tel capteur est notamment mentionné dans le document « Nanoelectronic and nanomecanical systems, J.S. Aldridge, SPIE Proceedings 2001 *».*

Ces moyens peuvent être aussi basés sur une détection capacitive ou sur une détection piézoélectrique, lesquelles renseignent sur la déformation de l'élément mobile. De façon générale, la détection capacitive consiste à mesurer le courant qui circule au travers de la capacité formée entre l'élément 11 et le substrat 30, sous l'action d'une excitation électrique haute fréquence. La détection piézoélectrique consiste, quant à elle, à mesurer la tension aux bornes d'un élément piézoélectrique déposé sur l'élément mobile 11 (ou inclus dans celui-ci), lorsque cet élément est déformé. Sur ce dernier point, on peut se référer au document « Ultra-sensitive NEMS-based cantilevers for sensing, scanned probe and very high-frequency applications » Mo Li, H. X. Tang And M. L. Roukes, Nature nanotechnology Jan. 2007.

Comme le montre la figure 1, l'épaisseur du guide 1 est avantageusement plus importante au niveau de la première partie 10 fixée au support qu'à celui de l'élément mobile 11.

Bien entendu, l'épaisseur qui sera choisie pour le guide 1 dépendra de la longueur d'onde de l'onde électromagnétique délivrée par les moyens d'excitation. Dans l'exemple qui est donné, le dispositif de détection est adapté pour permettre la détection du CO₂ et la longueur d'onde est fixée à environ 4,2 µm.

Dans ce cas, l'épaisseur e₁ du guide, au niveau de l'élément 11, est comprise entre 0.1 et 1 µm, par exemple 0.6 µm, tandis que l'épaisseur e₂ de la première partie 10 du guide est comprise entre 1 et 2 µm.

Pour renforcer le confinement du champ électromagnétique dans le guide au niveau de sa première partie 10, l'épaisseur de celui-ci peut être augmentée en prévoyant une couche supplémentaire 32 de silice, dont l'épaisseur est d'au moins 0,5 µm voire de l'ordre de 1 µm.

De façon générale, les épaisseurs e₁ et e₂ des première et deuxième parties 10 et 11 du guide 1 doivent être différenciées de façon à obtenir un confinement de champ électromagnétique, au niveau de la première partie 10 et un champ électromagnétique en bord du guide, au niveau de l'élément de type lame 11.

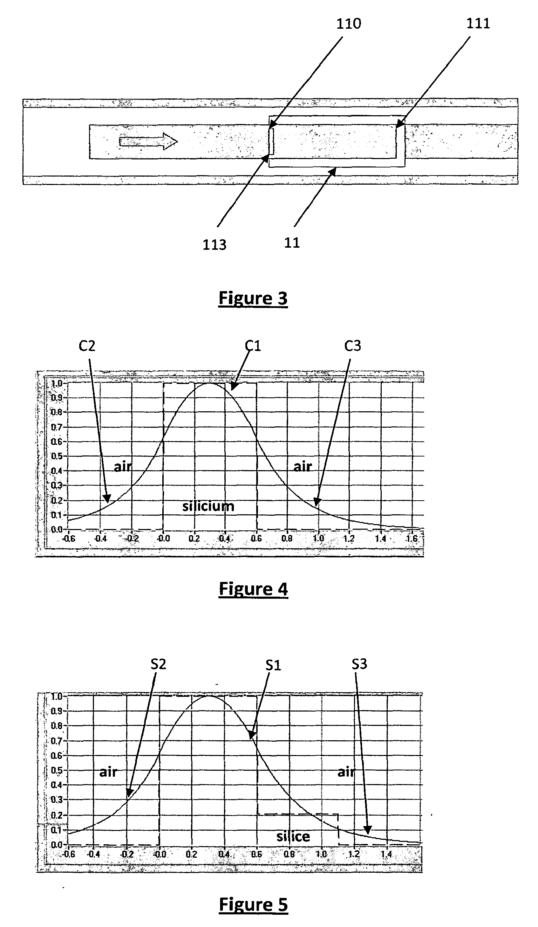

La figure 4 illustre l'évolution de l'amplitude du champ électromagnétique normalisé, selon la position par rapport à l'élément mobile 11.

Cet élément mobile est réalisé en silicium et présente une épaisseur de 0.6 µm. L'évolution de l'amplitude du champ à l'intérieur de l'élément mobile correspond à la portion C1 de la courbe représentée. L'évolution de l'amplitude du champ électromagnétique à proximité de chacune des faces de l'élément 11 est représentée par les portions de courbe C2 et C3.

Ainsi, la figure 4 montre l'intérêt de disposer d'un élément mobile 11 dont l'épaisseur est réduite. En effet, plus cette épaisseur est réduite, plus l'intensité du champ à proximité de l'élément 11 est importante et peut donc servir à exciter les molécules du gaz que l'on souhaite détecter. La précision obtenue sera donc augmentée.

A titre de variante, une des faces de l'élément mobile 11 peut être recouverte d'une couche présentant un indice inférieur à celui du silicium et, de préférence, un indice proche de celui de l'air.

Ainsi, sur un élément de type lame réalisé en silicium et présentant une épaisseur de 0.6 µm, peut être prévue sur l'une de ses faces, par exemple la face 112, une couche en silice d'une épaisseur de 0.5 µm.

La répartition du champ électromagnétique à l'intérieur de l'élément 11 et de part et d'autre de cet élément, est illustrée à la figure 5.

Ainsi, la courbe S1 montre l'évolution de l'amplitude du champ électromagnétique à l'intérieur de la partie en silicium (de 0 à 0.6 µm) puis dans la partie en silice (de 0.6 à 1.1 µm).

La courbe S2 montre l'évolution de l'amplitude du champ électromagnétique dans une zone s'éloignant de la face en silicium de l'élément 11 (de 0 à -0.6 µm), tandis que la courbe S3 montre l'évolution de l'amplitude du champ électromagnétique en s'éloignant de la face en silice de l'élément mobile 11 (de 1.1 à 1.5 µm).

Dans cette variante de réalisation, une dissymétrie est introduite dans l'élément 11. Ainsi, le champ électromagnétique qui se développe à proximité de la face en silicium est d'une intensité plus importante que celui développé à proximité de la face en silice, le champ étant plus intense du côté du milieu dont l'indice est le plus important.

En particulier, on peut noter que, sur la surface en silicium de l'élément 11, l'amplitude du champ électromagnétique est environ 6 fois plus importante que l'amplitude de ce champ sur la face en silice de l'élément 11.

De ce fait, l'intensité du champ électromagnétique est environ 36 fois plus forte à la surface du silicium qu'à la surface de la silice.

Ainsi, ce sont essentiellement les molécules du gaz situées du côté de la couche en silicium de l'élément 11 qui seront excitées. Ceci permet d'accroître la sensibilité de la mesure en favorisant les chocs des molécules excitées sur au moins une des deux faces de l'élément 11.

Il convient cependant de noter que le dispositif de détection selon l'invention est efficace même si aucune dissymétrie n'est introduite dans la structure de l'élément du type lame. En effet, la densité du gaz autour de cet élément n'est pas homogène.

La largeur ℓ du guide 1 peut être comprise entre 1 et 10 µm et, de préférence, entre 1 et 2 µm, au niveau de la première partie 10 et entre 0,6 et 2 µm au niveau de l'élément 11. La figure 2 illustre un guide d'onde dont la largeur est identique dans les première et deuxième parties 10 et 11.

Par ailleurs, sa longueur L peut être comprise entre 10 et 500 µm et, de préférence, entre 10 et 100 µm.

La largeur et la longueur du guide sont indépendantes de la longueur d'onde du gaz à détecter.

Cependant, pour un guide monomode, la largeur peut être voisine de la longueur d'onde. Dans ce cas, l'onde est polarisée transversalement.

De façon générale, le rapport L/ℓ est au moins égal à 10.

On comprend que la longueur de l'élément 11 conditionne sa souplesse ou encore sa capacité à vibrer.

Cependant, la longueur est limitée par l'exigence de tenue mécanique de la lame.

Ainsi, dans un autre de mode de réalisation, l'extrémité distale 111 n'est pas libre comme illustré sur les figures 1 et 2 mais reliée au support et notamment à la couche 31.

Dans cette variante de réalisation, l'élément 11 est donc fixé à ses extrémités proximale et distale. Ceci permet d'augmenter la longueur de l'élément.

Une autre variante de réalisation est illustrée à la figure 3.

Dans cette variante, une fente 113 est réalisée dans l'élément 11 à proximité de son extrémité proximale 110.

Cette fente est réalisée sensiblement transversalement, par rapport à la direction dans laquelle s'étend l'élément 11.

Elle permet d'assouplir l'élément 11 et favorise donc sa mise en vibration.

Lorsque l'élément 11 est fixé à ses deux extrémités, une telle fente peut avantageusement être prévue au niveau de ses extrémités proximale et distale.

La description qui précède montre que le dispositif de détection de gaz est particulièrement compact puisque d'une part, le guide d'onde joue à la fois le rôle de moyen d'excitation et de moyen de détection de l'échauffement du gaz et d'autre part, le capteur de mesure de la vibration est à proximité du guide d'onde.

Le dispositif de détection sera d'autant plus sensible que la surface L.ℓ de l'élément 11 est importante et que l'épaisseur e est faible.

Par ailleurs, le dispositif de détection peut être placé directement dans le milieu contenant le gaz que l'on souhaite détecter, sans nécessiter des moyens annexes comme des moyens de pompage pour assurer la circulation du gaz. Ce dispositif peut donc être utilisé facilement dans des applications domestiques.

Des variantes de réalisation peuvent être envisagées pour augmenter la puissance des moyens d'excitation du gaz et augmenter ainsi la sensibilité du dispositif.

Ainsi, l'augmentation de la puissance peut être classiquement obtenue par un miroir structuré sur le guide d'onde (miroir de Bragg), placé après l'élément mobile pour renvoyer le flux lumineux dans celui-ci et ainsi doubler la puissance d'excitation.

La figure 6 illustre une cavité laser en anneau, la référence 5 illustrant le milieu à gain laser et la référence 11 correspondant à l'élément mobile du dispositif de détection.

La puissance laser peut être multipliée par 2, voire par un facteur supérieur, par exemple, compris entre 10 ou 100, en faisant ainsi circuler plusieurs fois l'onde électromagnétique dans l'élément mobile.

Cet agencement particulier de la source laser permet d'augmenter la puissance laser au niveau de l'élément mobile 11, grâce à un fonctionnement dit en multiple passage.

Cette augmentation de la puissance de l'onde électromagnétique permet d'accroître la sensibilité du dispositif de détection selon l'invention, sans augmenter la puissance laser de la source.

Toujours dans le but d'augmenter la sensibilité du dispositif, on peut envisager de moduler l'excitation électromagnétique à une fréquence multiple ou sous-multiple de celle de la résonance naturelle de l'élément mobile 11, c'est-à-dire aux fréquences propres de l'élément mobile. Ceci permet d'exacerber l'amplitude de résonance par un processus d'excitation résonant et cumulatif. La détection peut être renforcée par la détection synchrone.

Si le milieu comprend plusieurs gaz différents devant tous être détectés, on peut envisager de faire fonctionner en parallèle plusieurs dispositifs de détection tels que précédemment décrits, la structure de chacun d'eux étant adaptée à un des gaz à déterminer.

Dans une autre variante, les différents gaz présents dans le milieu sont détectés successivement, avec un seul dispositif de détection, grâce à une source laser accordable dont la longueur d'onde est ajustée à chaque détection.

On se réfère maintenant aux figures 7a à 7d qui décrivent quatre étapes d'un procédé d'obtention d'un dispositif de détection selon l'invention du type illustré sur les figures 1 et 2.

La première étape du procédé (figure 7a) consiste à réaliser un empilement de trois couches successives : une couche 30 en silicium, une couche 31 en silice et une couche 33 en silicium.

Un tel empilement convient à la réalisation d'un dispositif de détection du CO₂, ce dispositif fonctionnant avec une onde électromagnétique dont la longueur d'onde est d'environ 4.2 µm.

Dans ce cas, l'épaisseur de la couche de silice 31 est typiquement comprise entre 1 et 10 µm, tandis que l'épaisseur de la couche de silicium 33 est comprise entre 1 et 2 µm. Comme indiqué précédemment, la couche de silicium peut être recouverte d'une gaine de silice.

L'étape suivante (figure 7b) consiste en une étape de photolithographie et de gravure réalisée sur la couche de silicium 33, de façon à l'amincir dans la région 330.

Dans cette zone 330, l'épaisseur de la couche de silicium sera comprise entre 0.1 et 1 µm, par exemple égale à 0.6 µm.

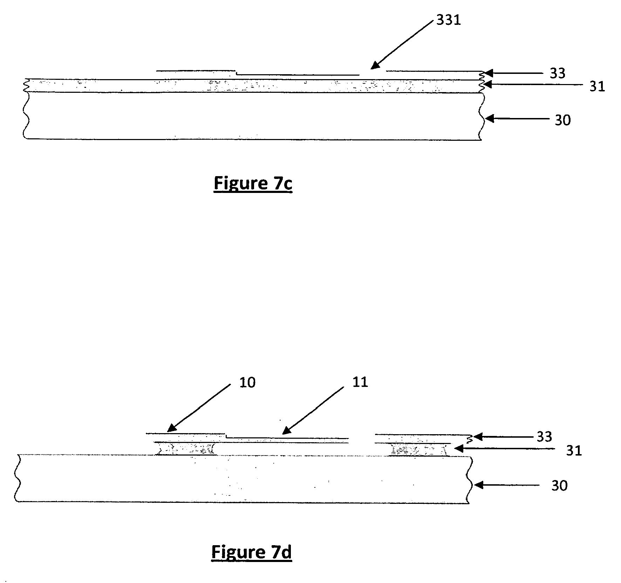

L'étape suivante du procédé (figure 7c) est une étape de photolithographie et de gravure grâce à laquelle la couche de silicium 33 est complètement retirée dans une zone 331, située à l'extrémité de la zone 330.

La dernière étape (figure 7d) consiste à pratiquer une gravure humide, ionique réactive ou en phase vapeur, de façon à éliminer la couche de silice 31 sous les zones 330 et 331, éventuellement au travers d'un masque lithographique.

Ces différentes étapes permettent d'obtenir les deux parties 10 et 11 du guide dont les épaisseurs sont différenciées et de libérer la partie 11 du guide de l'empilement constitué par les couches 30 et 31. L'élément 11 est ainsi rendu mobile et pourra entrer en vibration du fait du choc des molécules du gaz sur ses faces.

Bien entendu, des procédés similaires pourront être utilisés pour réaliser des variantes structurelles du dispositif de détection selon l'invention.

Par ailleurs, le procédé peut être utilisé pour réaliser directement sur la couche de silicium le capteur 4 prévu pour mesurer la vibration de l'élément 11.

Il est, à cet égard, de nouveau fait référence à l'article de Hagleitner C. and al.

Les signes de référence insérés après les caractéristiques techniques figurant dans les revendications ont pour seul but de faciliter la compréhension de ces dernières et ne sauraient en limiter la portée.

## Revendications

1. Dispositif de détection d'un gaz comprenant :
- des moyens d'excitation dudit gaz au moyen d'une onde électromagnétique dont la longueur d'onde correspond sensiblement à celle dudit gaz et
- des moyens de détection de l'excitation dudit gaz,
**caractérisé en ce qu'**il comprend :
- un guide d'onde (1) relié aux dits moyens d'excitation dont une partie (11) forme un élément mobile destiné à être en contact avec ledit gaz et susceptible d'être mis en vibration par le choc des molécules du gaz excité et
- un capteur (4) de mesure de la vibration dudit élément, ledit capteur de mesure et ledit élément formant ledit moyen de détection.

2. Dispositif selon la revendication 1, dans lequel l'élément mobile est de type lame.

3. Dispositif selon la revendication 2, dans lequel l'élément mobile est de type peigne.

4. Dispositif selon l'une des revendications 1 à 3, **caractérisé en ce que** ledit élément (11) est maintenu en porte à faux au niveau de son extrémité proximale (110), son extrémité distale (111) étant libre.

5. Dispositif selon l'une des revendications 1 à 3, **caractérisé en ce que** les extrémités proximale (110) et distale (111) de l'élément (11) sont maintenues fixes.

6. Dispositif selon la revendication 4 ou 5, **caractérisé en ce que** l'élément (11) comporte, à proximité de son extrémité proximale (110) et/ou distale (111), une fente (113) s'étendant sensiblement transversalement.

7. Dispositif selon l'une des revendications 1 à 6, **caractérisé en ce que** l'épaisseur (e₁) de l'élément (11) est inférieure à celle (e₂) du reste du guide d'onde (10).

8. Dispositif selon l'une des revendications 1 à 7, **caractérisé en ce que** le guide d'onde est réalisé en un seul matériau.

9. Dispositif selon la revendication 8, **caractérisé en ce que** ledit élément comporte sur l'une de ses faces (112), une couche d'un matériau présentant un indice inférieur à celui constituant le guide d'onde.

10. Dispositif selon l'une des revendications 1 à 8, **caractérisé en ce que** les moyens d'excitation du gaz sont constitués par un laser.

11. Dispositif selon la revendication 9, **caractérisé en ce que** la cavité laser est en anneau, le guide d'onde étant placé à l'intérieur de la cavité laser.

## Patentansprüche

1. Vorrichtung zur Erkennung eines Gases, umfassend:
- Erregungsmittel des Gases mittels einer elektromagnetischen Welle, deren Wellenlänge etwa der des Gases entspricht, und
- Detektionsmittel der Erregung des Gases,
**dadurch gekennzeichnet, dass** sie umfasst:
- einen mit den Erregungsmitteln verbundenen Wellenleiter (1), von dem ein Teil (11) ein bewegliches Element bildet, das bestimmt ist, mit dem Gas im Kontakt zu sein und imstande, durch den Aufprall der Moleküle des erregten Gases in Vibration versetzt zu werden, und
- einen Sensor (4) zum Messen der Vibration des Elements, wobei der Mess-Sensor und das Element das Detektionsmittel bilden.

2. Vorrichtung nach Anspruch 1, wobei das bewegliche Element vom Typ Lamelle ist.

3. Vorrichtung nach Anspruch 2, wobei das bewegliche Element vom Typ Kamm ist.

4. Vorrichtung nach einem der Ansprüche 1 bis 3, **dadurch gekennzeichnet, dass** das Element (11) im Bereich seines proximalen Endes (110) vorspringend gehalten wird, wobei sein distales Ende (111) frei ist,

5. Vorrichtung nach einem der Ansprüche 1 bis 3, **dadurch gekennzeichnet, dass** das proximale (110) und distale (111) Ende des Elements (11) fest gehalten werden.

6. Vorrichtung nach Anspruch 4 oder 5, **dadurch gekennzeichnet, dass** das Element (11) in der Nähe seines proximalen (110) und/oder distalen (111) Endes einen Schlitz (113) aufweist, der sich etwa quer erstreckt.

7. Vorrichtung nach einem der Ansprüche 1 bis 6, **dadurch gekennzeichnet, dass** die Dicke (e₁) des Elements (11) geringer ist als die Dicke (e₂) des Rests des Wellenleiters (10).

8. Vorrichtung nach einem der Ansprüche 1 bis 7, **dadurch gekennzeichnet, dass** der Wellenleiter aus einem einzigen Material hergestellt ist.

9. Vorrichtung nach Anspruch 8, **dadurch gekennzeichnet, dass** das Element auf einer seiner Seiten (112) eine Schicht eines Materials aufweist, das einen niedrigeren Index als den, welchen der Wellenleiter bildet, aufweist

10. Vorrichtung nach einem der Ansprüche 1 bis 8, **dadurch gekennzeichnet, dass** die Erregungsmittel des Gases von einem Laser gebildet sind.

11. Vorrichtung nach Anspruch 9, **dadurch gekennzeichnet, dass** die Laserkavität ringförmig ist, wobei der Wellenleiter im Innern der Laserkavität platziert ist.

## Claims

1. Device for detecting a gas, comprising:
- excitation means, for exciting said gas by means of an electromagnetic wave having a wavelength corresponding approximately to that of said gas; and
- detection means, for detecting the excitation of said gas,
**characterized in that** it comprises:
- a waveguide (1) connected to said excitation means, a part (11) of which forms a movable element designed to be in contact with said gas and capable of being set into vibration by the impact of the excited gas molecules; and
- a measurement sensor (4), for measuring the vibration of said element, said measurement sensor and said element forming said detection means.

2. Device according to Claim 1, in which the movable element is of the strip type.

3. Device according to Claim 2, in which the movable element is of the comb type.

4. Device according to one of Claims 1 to 3, **characterized in that** said element (11) is cantilevered at its near end (110), its far end (111) being free.

5. Device according to one of Claims 1 to 3, **characterized in that** the near end (110) and the far end (111) of the element (11) are held fixed.

6. Device according to Claim 4 or 5, **characterized in that** the element (11) includes, close to its near end (110) and/or its far end (111), a slot (113) extending approximately transversely.

7. Device according to one of Claims 1 to 6, **characterized in that** the thickness (e₁) of the element (11) is less than that (e₂) of the rest of the waveguide (10).

8. Device according to one of Claims 1 to 7, **characterized in that** the waveguide is made of a single material.

9. Device according to Claim 8, **characterized in that** said element has, on one of its faces (112), a layer of a material having an index lower than that constituting the waveguide.

10. Device according to one of Claims 1 to 8, **characterized in that** the gas excitation means are formed by a laser.

11. Device according to Claim 9, **characterized in that** the laser cavity is a ring laser cavity, and in the waveguide is placed inside the laser cavity.
